# EUROPEAN PATENT SPECIFICATION

(11) **EP 2 635 808 B1**
(45) Date of publication and mention of the grant of the patent: **13.01.2016**
(21) Application number: 11779337.2
(22) Date of filing: 02.11.2011
(51) Int. Cl.: F03D 11/00, F03D 9/00, F03D 7/00

(54) **Wind turbine system and method using voltage generating material**
Windenergieanlage und Verfahren mit Spannungserzeugendem Material
Système d'éolienne et procédé mettant en oeuvre un matériau générateur de tension

(30) Priority: 02.11.2010 US 409154 P; 02.11.2010 GB 201018501
(43) Date of publication of application: 11.09.2013
(73) Proprietor: Vestas Wind Systems A/S, 8200 Aarhus N (DK)
(72) Inventor: HJORT, Thomas, DK-7120 Vejle Øst (DK)
(74) Representative: Vestas Patents Department
(86) International application number: PCT/DK2011/050414
(87) International publication number: WO 2012/059107

(56) References cited:
- EP-A2- 1 788 240
- US-A1- 2008 218 132
- US-A1- 2009 232 635

## Description

The present invention relates to a wind turbine system and method using a voltage generating material to provide power for one or more devices mounted on the wind turbine, and in particular to a sensor system and method for measuring a parameter of a wind turbine component.

In order to optimise the extraction of energy from the wind, wind turbines are typically equipped with a number of sensor devices for providing feedback to the control systems of the turbine. For example, sensor devices are commonly used for monitoring environmental conditions at the wind turbine as well as for measuring parameters of the wind turbine components, such as strain. Using the data obtained from these sensor devices, the operational parameters of the wind turbine, such as the pitch of the blades or the yaw of the nacelle, can be adjusted in order to make the wind turbine as efficient as possible at generating energy and also to prevent damage to the wind turbine components.

In addition to sensor devices for measuring different parameters of the wind turbine components, a wind turbine may also be provided with other types of electrical or electronic device such as lights, or identification tags.

The devices used in a wind turbine are typically adapted to generate a certain type of output signal, to be received and processed by humans or machines. For example, certain types of devices may generate an optical signal, a radio signal or another type of electromagnetic or magnetic signal during use. In order to generate the output signal the devices typically require at least a low level of power to be supplied.

In some cases, power may be supplied from a battery. The use of a battery may be relatively convenient since it can often be incorporated into the device itself. However, the lifetime of the battery is likely to be much shorter than the lifetime of the wind turbine and so it is necessary to regularly replace the battery, so that the device can continue to function throughout the life of the turbine.

In other cases, power may be supplied from a remote source, such as from the wind turbine itself or from a mains supply that has been incorporated within the turbine nacelle or tower. Remote power supplies must typically be connected to the device by means of electrical cables. However, the use of electrical cables in wind turbine components, and in particular within wind turbine blades, is undesirable since it significantly increases the risk of damage to the wind turbine as a result of lightning strikes.

EP1788240 discloses a sensor system for use on turbine components where an electromechanical converter in the form of an electromagnetic or piezoelectric vibration converter is used as an autonomous power supply.

US2009/0232635 discloses use of an independent power source to power a sensing device in the form of a mechanical to electrical converter for converting linear/vibrational motion to electric current.

It would be desirable to provide a novel and more efficient way of providing power to the devices used on a wind turbine. It would be particularly desirable to provide a novel way of supplying power to the devices throughout the lifetime of the turbine without replacement and which is preferably self-sufficient. Furthermore, it would be desirable if the devices on a wind turbine could be powered from a renewable energy source.

According to the invention there is provided a system for a wind turbine comprising: one or more devices operatively mounted on a wind turbine for generating an output signal during use; and a voltage source in electrical connection with the one or more devices for powering the one or more devices during use. The voltage source comprises at least one layer of a voltage generating material in the form of a dielectric electroactive polymer capable of producing a voltage upon deformation. The at least one layer of voltage generating material is operatively incorporated into a wind turbine component which is subject to deformation during operation of the wind turbine, being provided as a layer within a composite structure of the component

The term "device" refers to any of the electrical, electronic or other types of components used on wind turbines to generate an output signal, either continuously, or under certain conditions during operation of a turbine. Each device used on a wind turbine is connected into an electrical circuit and requires a power supply to provide a voltage to the device during use. Different suitable types of device for use in the present invention will be described in more detail below.

The term "voltage generating material" is used to refer to a type of material that generates a voltage upon deformation through the conversion of mechanical energy to electrical energy. Such materials may also be described as "charge generating" or "current generating" materials since a charge and a current are also generated upon deformation of the material. During normal operation of a wind turbine, a certain level of deformation and vibration of the wind turbine blades will occur as a result of the forces to which the blades are subjected. Whilst deformation of the blades can be minimised by optimising the aerodynamic properties of the blade and the control systems of the wind turbine, it cannot be eliminated entirely. Other components of the wind turbine, such as the tower, will also be subjected to relatively large forces from the wind during normal use and therefore also experience significant deformation. The deformations will typically be even higher in high wind conditions.

The system of the present invention uses a voltage generating material to harness energy from the wind which would otherwise not be captured by the wind turbine and therefore wasted. This includes, for example, energy from the wind that is incident on the wind turbine blades in a direction other than the direction that is needed in order to produce lift in the blades, e.g. thrust.

By converting the mechanical energy generated by the deformation of a wind turbine component into electrical energy, the voltage generating materials are able to indirectly capture and utilise energy from the wind, in addition to the energy captured by the wind turbine blades. As such, the voltage generating materials provide a renewable and sustainable source of energy for powering devices that are mounted on the wind turbine, which can be used in place of conventional power sources such as batteries.

As recited above, the voltage generating material comprises a dielectric electroactive polymer (DEAP), also known as a dielectric elastomer. One or more layers of a dielectric electroactive polymer may be provided on or within a wind turbine component, between two electrodes. The combination of the layer of DEAP with electrodes on either side provides a form of flexible capacitor, where a deformation of the DEAP material resulting in a change in the thickness of the layer between the electrodes brings about a change in the capacitance.

Specifically, as the DEAP material stretches, the thickness of the layer is reduced and the area is increased, causing an increase in the capacitance of the material. In this state, the capacitor is then charged to a given voltage. When the tension in the wind turbine component is released and the DEAP material relaxes back towards the original thickness, the capacitance reduces again. Since the charge on the capacitor remains constant, the voltage will therefore rise. The electrical energy generated in a capacitor is proportional to the square of the voltage (E = ½CV²) and therefore the relaxation of the DEAP material after its deformation leads to a release of energy.

The mechanical energy generated by the deformation of the material is thereby converted into electrical energy by the DEAP material. The electrical energy is harnessed by connecting the electrodes into an electrical circuit and the resultant electrical power is supplied to the one or more devices in the system of the present invention.

The properties of DEAPs make the materials particularly suitable for use on wind turbine components. In particular, the materials are highly flexible and can support very high strains such as those experienced by wind turbine components. The materials have a very high possible energy density (Joules of energy generated per kg), which means that sufficiently high levels of energy can be generated for providing power to the devices using a relatively low amount of material. Advantageously, the presence of the layer of DEAP therefore should not significantly increase the overall weight of the wind turbine component in which the voltage source is incorporated. Furthermore, the materials do not degenerate with continued use and so should not require servicing or replacement during the lifetime of the wind turbine component.

Suitable DEAP materials are available from Danfoss Polypower A/S. The material is typically provided in the form of a polymer film which can readily be incorporated onto or into a wind turbine component during manufacture. For example, a layer of the film could be adhered to the inner surface or the outer surface of a blade shell whilst the blade shell is being formed in the mould. Alternatively, a layer of the film may be incorporated within the internal structure of the blade shell during lay up of the fibrous layers within the mould. The form of the material, as a film, means that it is simple to provide a layer of the DEAP material having a uniform thickness. In addition, it is possible to shape the layer of film before applying it to the surface of the wind turbine blade component, so that the area covered by the layer of DEAP, and the shape of the layer can be controlled in a very straightforward way.

The use of a voltage generating material of this type advantageously results in the system of the present invention being a self-powered and therefore self-sufficient system, which can itself generate sufficient energy to power the one or more devices continuously throughout the lifetime of the turbine. The system of the present invention requires no further power input in order to function under normal operating conditions of the turbine. This not only reduces the number of components that are required within the wind turbine component, but also reduces the amount of system maintenance and replacement that will be required.

Furthermore, the system according to the invention advantageously avoids the need to use electrical cables to connect the devices to a remote power supplies within the nacelle. This can greatly simplify the system incorporating the one or more devices and in addition, reduces the number of electrical components within the wind turbine which may be vulnerable to lightning strikes. This in turn reduces the risk of damage to the wind turbine components and the devices incorporated within the components.

The amount of voltage generating material that is required to generate electrical energy to power the small electrical and electronic devices typically used on a wind turbine may be relatively low since a relatively small deformation of the material is typically required in order to generate a significant voltage. The incorporation of the voltage generating materials into a wind turbine component, such as a wind turbine blade, should therefore not have a significant effect on the overall weight of the component or the function thereof.

Advantageously, there is a large available surface area for the application of the voltage generating material in wind turbine components, such as blades. The layer of the voltage generating material may be incorporated into the composite structure of a blade shell during the lay up process, so that the layer of voltage generating material is embedded within the blade shell.

The system according to the invention may incorporate any of the electric or electronic devices used on a wind turbine, which emit an output signal for some purpose and therefore require connection to a source of electrical power. A wide variety of such devices would be well known to the skilled person. The form of the output signal may vary depending upon the type of device incorporated into the system but may include, for example, a light signal, a radio signal or any suitable type of electromagnetic or magnetic signal.

Preferably, the system comprises one or more sensors operatively mounted on the wind turbine component for measuring a parameter of the wind turbine during use and generating an output signal based on measurement data from the one or more sensors. The measured parameter may be a parameter of the wind turbine component itself, or a parameter of the environmental conditions at or proximate to the component. For example, suitable sensors include but are not limited to sensors for the measurement of: temperature, strain, vibration, acceleration, deflection, deformation, noise or voltage. Each sensor will include a form of transmitter for transmitting the output signal based on the measured parameter of the component. The transmitter may be wireless, such that the output signal is transmitted wirelessly to a remote receiver. Alternatively, the output signal may be transmitted to a controller or receiver by means of an electrical or optical connection, such as cables or wires.

Alternatively or in addition, the system according to the invention may comprise one or more devices for detecting or monitoring the position, orientation or location of a wind turbine component, such as a blade, or a particular part of a component. Suitable devices for this purpose may include, for example, one or more optical elements or tags, such as a magnetic tag or a radio frequency identification (RFID) tag. These devices can be detected by an appropriate sensor, which will typically be provided remotely from the device.

Tags, such as magnetic or RFID tags, may additionally provide unique data relating to the component, such as the serial number, manufacturer details, or data relating to the manufacture of the component. This allows the component to be uniquely identified and tracked.

Alternatively or in addition, the system may comprise one or more heating elements, such as resistive elements, forming part of a de-icing system. De-icing systems are commonly used to heat blade surfaces in order to prevent the build up of ice on the surface, which could adversely affect the aerodynamic properties of the blade and may also contribute to erosion or damage to the blade surface.

Alternatively or in addition, the system may comprise one or more light-emitting devices (LEDs). For example, lights are commonly used on wind turbines as aircraft warning lights to make the turbine more visible to low flying aircraft during darkness. Lights may also be incorporated into sensor systems to provide a visual indicator of a defect in a wind turbine component, such as a loosening of a wind turbine bolt.

In the system of the present invention, the energy harnessed by the voltage generating materials in the voltage source is used to power the one or more devices and there must therefore be an electrical connection between the voltage source and the one or more devices. The electrical connection may be a direct connection, such that the voltage source is connected directly to the one or more devices by means of suitable electrical cables or wiring. The voltage generated by the voltage generating material is therefore directed straight to the one or more devices. If desired, the one or more devices may each comprise an associated, rechargeable electrical energy storage component, such as battery, that can store the power from the voltage source such that it can be used to power the one or more devices over a longer time period, or at a later time. This may be desirable, for example, in the case of a device which is intended to generate an output signal intermittently.

Alternatively, the electrical connection between the voltage source and the one or more devices may be an indirect electrical connection such that the voltage source is not connected directly to the one of more devices but is instead connected to a remote battery or other storage component, which is in turn connected to the one or more devices. In this case, both the connection between the voltage source and the storage component and the connection between the battery and the one or more devices may be made using suitable electrical wires or cables.

In certain systems according to the invention, it may be desirable to connect the voltage source to the one or more devices or the storage component through a slip ring mounted on a stationary component of the wind turbine, which is connected into the electrical circuit using a brush. These types of connections are commonly used in wind turbines and would be well known to the skilled person. Systems where such connection between the voltage source and the one or more devices or a storage component may be advantageous include, for example, those in which the one or more devices are mounted on a wind turbine blade whilst the voltage source or storage component is mounted within the nacelle or tower. In these cases, a slip ring arrangement is preferred since the blades will be continually moving in relation to the nacelle or tower, making a standard wired connection difficult to incorporate.

Preferably, the system according to the invention further comprises a controller for receiving the output signal from the one or more devices. In a preferred embodiment of the invention in which the system includes one or more sensor devices, the system further comprises a controller for receiving the measurement data from the one or more sensor devices and outputting one or more control signals for varying an operational parameter of the wind turbine.

Using a system of this type, the operational parameters of the wind turbine can be adjusted in response to the measured parameters in order to optimise the energy extraction of the wind turbine and counteract undesired strains or loads on the wind turbine components. For example, the system may include one or more devices for measuring the wind speed and direction in combination with a controller, so that the pitch and/or yaw of the wind turbine blades can be adjusted according to the measured wind conditions in order to optimise efficiency. In a further example, the system may include one or more strain sensor devices in combination with a controller, so that the position of the blades can be adjusted in order to reduce strain or loading of the blades.

Preferably, the voltage source of the system according to the invention includes a layer of an insulating material operatively provided between the layer of voltage generating material and the external or internal surfaces of the wind turbine component in contact with the voltage source. In this way, the layer of voltage generating material is electrically isolated from the wind turbine component so that the risk of damage to the wind turbine component due to lightning strike is minimised.

The voltage generating material may, for example, be in the form of a laminate material, with a layer of the voltage generating material deposited on a base layer of an insulating material. In this way, the layer of voltage generating material and the layer of insulating material can conveniently be incorporated into the wind turbine component together, in a single step.

When the system according to the invention is in place on a wind turbine, the one or more devices should be mounted on the wind turbine in an appropriate position, depending on the function. The one or more devices may, for example, be mounted on the outside of the wind turbine if the function of the device is to provide a visible, optical signal, or to measure a parameter of the surrounding environment such as wind speed. However, if the devices are intended for measuring a parameter of a wind turbine component, such as strain, the one or more devices may be mounted inside a wind turbine component, such as a blade.

The at least one layer of voltage generating material is incorporated into a wind turbine component or a part of a wind turbine component that is subject to deformation during normal operation of the turbine, under normal wind conditions. Without deformation of the voltage generating material, no mechanical energy is put into the material and hence no electrical energy can be generated to power the one or more devices of the system. As is well known, wind turbine blades are subject to high loads during normal operation of the wind turbine and the wind turbine components, such as the shells and inner webs, spar or beam, will be continuously subject to relatively high levels of deformation. Under high wind conditions, the level of deformation will typically be even higher.

In certain preferred embodiments, the one or more layers of voltage generating material are therefore applied to an inner and/or outer surface of a wind turbine blade component within the composite structure forming a wind turbine blade component. For example, a layer of voltage generating material may be incorporated within the shell of a wind turbine during lay up within the mould.

The one or more layers of voltage generating material are preferably provided on the part or parts of the blade component which are subject to the highest degree of deformation during operation of the wind turbine. Where the one or more layers of voltage generating material are incorporated into a wind turbine blade shell, the layers are preferably provided generally towards the tip end of the blade where the deformation is greatest. For example, a blade of around 40m in length will typically have a region of maximum flapwise deflection at a point about 30m from the root.

During normal operation of a wind turbine, the wind turbine tower will be caused to bend or twist and therefore components of the tower will also be subjected to significant deformation. As with the blades, under high wind conditions, the level of deformation will typically be even higher. The one or more layers of voltage generating material may therefore be provided on an inner and/or outer surface of the wind turbine tower.

Particularly effective voltage generation may be achieved if the layer of DEAP material is applied to a wind turbine component with a relatively high level of vibration or oscillation during normal operation, such as the wind turbine blades. This is because the DEAP material relies on a change in thickness in order to convert mechanical energy to electrical energy.

The one or more devices may be mounted on the same wind turbine component as the voltage source, or a different component, depending on the optimal location for each.

Preferably, the at least one layer of voltage generating material incorporated in the wind turbine component covers an area of between 10 m² and 50 m² and has a thickness of between around 0.5 mm and 2 mm. The mass of the voltage generating material is preferably between 10 kg and 50 kg.

The voltage source in the system according to the invention may include a single layer of voltage generating material, or may include two or more separate layers in separate parts of the wind turbine component, each of which are connected to one or more of the devices or the storage component by means of electrodes on opposite sides of the layer. A single pair of electrodes may be used to connect the voltage generating material into an electrical circuit in order to extract the voltage therefrom, or a plurality of pairs of electrodes may be incorporated across the layer, depending on the nature of the electrodes.

Preferably, the electrodes are sheet electrodes which be provided as a layer on either side of the voltage generating material, forming a sandwich construction. If appropriate, the voltage generating material may be deposited onto one of the electrodes before application to the wind turbine component, or the electrodes may be deposited onto opposite sides of a layer of the voltage generating material.

The present invention further provides a method for powering one or more devices on a wind turbine comprising:
(a) incorporating at least one layer of a voltage generating material in the form of a dielectric electroactive polymer into the composite structure of a wind turbine component such that the material generates a voltage upon deformation thereof;
(b) mounting one or more devices for operatively generating an output signal onto the wind turbine; and
(c) providing an electrical connection between the one or more devices and the voltage generating material such that during use the voltage generated by the layer of voltage generating material is used to power the one or more devices.

The method of the present invention provides a sustainable, renewable and efficient way to power the electric and electronic devices commonly used on wind turbines.

The method uses the system of the present invention, as described above, to harness wasted energy from a wind turbine by converting mechanical energy from deformation of a component of the wind turbine into electrical energy by means of a voltage generating material. In a particularly preferred embodiment, the method of the present invention is adapted for sensing a parameter of a wind turbine component and comprises:
(a) incorporating the at least one layer of a voltage generating material in the form of a dielectric electroactive polymer into a first wind turbine component such that the material generates a voltage upon deformation thereof;
(b) mounting one or more sensors on a second wind turbine component and providing an electrical connection between the one or more sensors and the voltage generating material;
(c) measuring a parameter of the second wind turbine component using the one or more sensors, wherein the one or more sensors emit an output signal based on the measured data; and
(d) receiving the output signal from the one or more sensors at a controller.

The first component may be the same as or different to the second component. The measured parameter may be a parameter of the wind turbine component itself, such as strain or deformation, or may be a parameter of the environmental conditions at the wind turbine component, such as temperature.

Preferably, the method for sensing a parameter of a wind turbine component includes a further step of: (e) generating a control signal from the controller for varying an operational parameter of the wind turbine in response to the measured parameter of the wind turbine component. In this way, the method of the present invention can be used as part of a feedback system to continuously adjust the parameters of the wind turbine, such as blade pitch and yaw, in order to optimise the energy extracted from the wind and prevent damage to wind turbine components.

The present invention also provides a wind turbine component having the system of the invention, as described above, mounted thereon. In a particularly preferred embodiment, the present invention provides a wind turbine blade having the system mounted thereon or therein.

The present invention will now be further described by way of example only and with reference to the following figures, in which:
Figure 1 is a front view of a horizontal axis wind turbine;
Figure 2a is a schematic cross sectional view of a wind turbine blade from the turbine of Figure 1 incorporating a first embodiment of the system of the present invention;
Figure 2b is an enlargement of a portion of the cross-sectional view of Figure 2a;and
Figure 3 is a schematic side view of the turbine of Figure 1 incorporating a second embodiment of the system of the present invention.

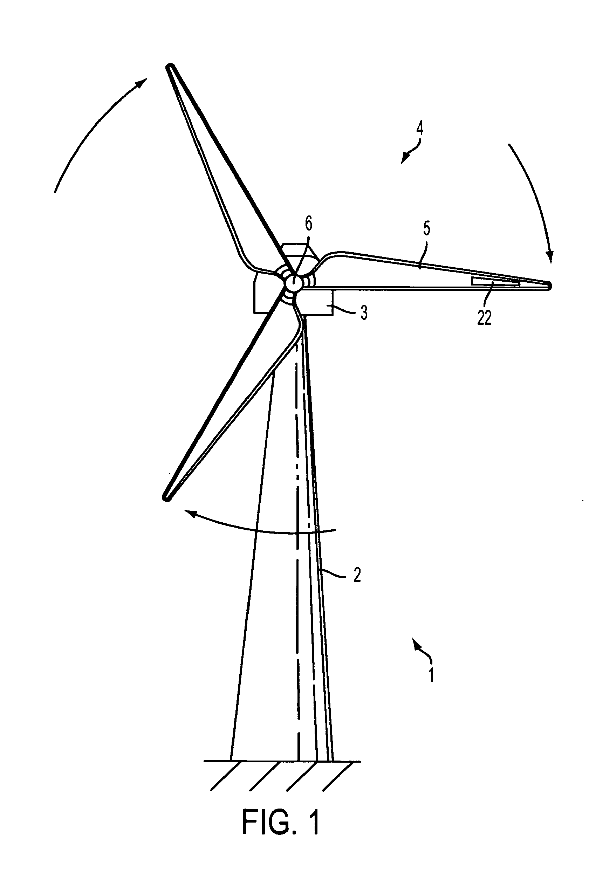

Figure 1 illustrates a wind turbine 1, comprising a wind turbine tower 2 on which a wind turbine nacelle 3 is mounted. A wind turbine rotor 4 comprising at least one wind turbine blade 5 is mounted on a hub 6. The hub 6 is connected to the nacelle 3 through a low speed shaft (not shown) extending from the nacelle front. The wind turbine illustrated in Figure 1 may be a small model intended from domestic or light utility usage, or may be a large model used, such as those that are suitable for use in large scale electricity generation on a wind farm for example. In the latter case, the diameter of the rotor could be as large as 100 metres or more.

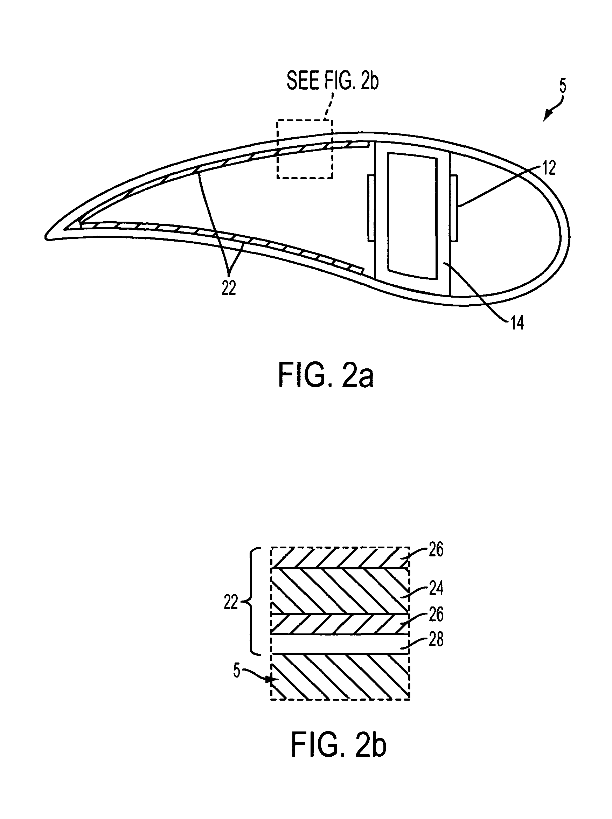

Figure 2a illustrates a wind turbine 1 into which a system according to a first embodiment of the invention has been incorporated into a blade 5. The system comprises a strain sensor 12, which is mounted on the outer surface of the central spar portion 14 of the wind turbine blade 5 in order to monitor strain in the spar portion 14 during operation of the wind turbine 1. The strain sensor 12 includes a light emitting device incorporated into an arrangement of optical fibres and light detectors in order to detect strain in the spar portion 14 using interferometry.

One or more light detectors in the strain sensor 12 receive light from the light emitting device through an optical fibre and send an output signal based upon the intensity of the light detected. The system includes a controller (not shown), which receives the output signal from the strain sensor 12 to determine the strain or deformation of the spar portion 14 on which the sensor 12 is mounted. This controller generates one or more control signals to adjust one or more of the operating parameters of the turbine, so that the strain on the spar portion 14 can be reduced or counteracted.

The system further comprises a voltage source 22 comprising a layer of a dielectric electroactive polymer (DEAP) 24 that has been sandwiched between a pair of sheet electrodes 26 to form a laminate film, which has been applied to an area of the inner surface of the shell of the wind turbine blade. An enlarged cross-sectional view of the laminate film in place on the shell is shown in Figure 2b, which is not to scale. As the wind turbine blade 5 vibrates and bends during normal operation of the turbine, the DEAP layer 24 converts the mechanical energy from the deformation of the blade into electrical energy for powering the components of the strain sensor 12, including the light emitting device. The laminate film additionally includes an insulating layer 28 which will be positioned against the inner surface of the shell of the blade 5.

The electrodes on either side of the DEAP layer 24 are connected to the strain sensor 12 directly by means of electrical cables (not shown).

During normal operation of the wind turbine 1, the voltage source 22 generates sufficient voltage through changes in the thickness of the DEAP layer 24 to continuously power the strain sensor 12. The system is therefore a self-powered, self-sufficient system and does not require a separate power supply.

It will be appreciated that while the system described above incorporates a specific type of strain sensor which uses interferometry to measure strain in the spar portion of the blade 5, other types of strain sensor could alternatively be incorporated, which use different arrangements and/or techniques to measure strain or deformation. In addition, sensors for measuring other parameters of the wind turbine or environmental parameters could be incorporated alternatively or in addition to a strain sensor.

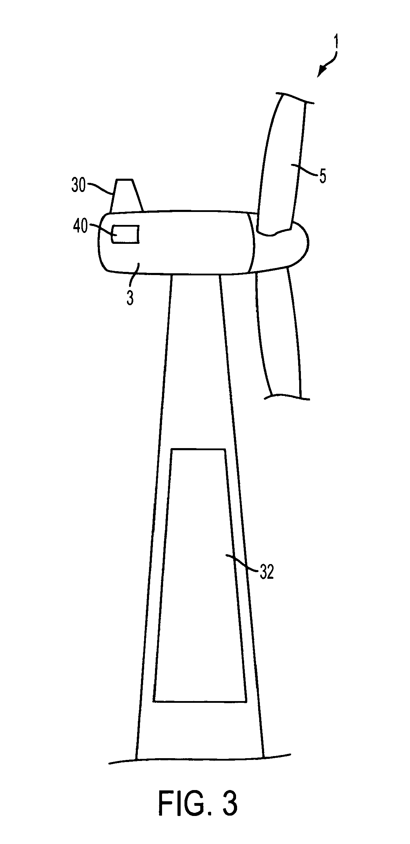

Figure 3 illustrates a wind turbine 1 into which a system according to a second embodiment of the invention has been incorporated. The system comprises an aircraft warning light 30, which has been centrally mounted on the top of the wind turbine nacelle 3. The aircraft warning light 30 is a high intensity light emitting device that illuminates the top of the wind turbine nacelle 3 in order to make the wind turbine visible to aircraft during the night.

The system further comprises a voltage source 32 comprising a layer of dielectric electroactive polymer that has been applied to an area of the inner surface of the wind turbine tower 2. As the wind turbine tower 2 vibrates and bends during normal operation of the turbine, the DEAP layer converts the mechanical energy from the deformation of the tower into electrical energy for powering the aircraft warning light 30.

Since the aircraft warning light 30 is only required to emit a beam of light during the hours of darkness, it is not necessary to supply the power generated by the piezoelectric crystals directly to the aircraft warning light 30. Instead, the system includes a power storage component 40 within the nacelle which stores the power until it is required by the light 30.

The system incorporates a controller (not shown) for controlling the timing and activation of the aircraft warning light 30, so that it is switched on and off at the appropriate times.

During normal operation of the wind turbine 1, the voltage source 32 generates sufficient voltage through deformation of the DEAP layer to power the aircraft warning light 30 during the hours of darkness. The system is therefore a self-powered, self-sufficient system and does not require a separate power supply.

## Claims

1. A system for a wind turbine comprising:
one or more devices operatively mounted on a wind turbine for generating an output signal during use; and
a voltage source in electrical connection with the one or more devices for powering the one or more devices during use, wherein the voltage source (22) comprises a voltage generating material capable of producing a voltage upon deformation;
**characterised in that** the voltage generating material comprises at least one layer of a dielectric electroactive polymer (24) provided as a layer within a composite structure of a wind turbine component which is subject to deformation during operation of the wind turbine.

2. A system according to any claim 1 wherein the one or more devices comprises one or more sensors (12) operatively mounted on the wind turbine component for measuring a parameter of the wind turbine during use and generating an output signal based on measurement data from the one or more sensors.

3. A system according to claim 2 wherein the one or more devices includes one or more strain or deformation sensors (12) for measuring the strain on the wind turbine component or the deformation thereof during use.

4. A system according to any preceding claim wherein the one or more devices includes a component operatively emitting radio frequency signals.

5. A system according to any preceding claim wherein the voltage source (22) further comprises a storage component for storing the voltage generated by the voltage generating material upon deformation.

6. A system according to any preceding claim further comprising a controller for receiving the output signal from the one or more devices and outputting one or more control signals for varying an operational parameter of the wind turbine.

7. A system according to any preceding claim further comprising a layer of an insulating material (28) operatively provided between the layer of voltage generating material (22) and the external or internal surfaces of the wind turbine component in contact with the voltage source.

8. A system according to any preceding claim wherein the voltage source is operatively provided on an area of the inner or outer surface of a wind turbine blade.

9. A method for powering one or more devices on a wind turbine comprising:
(a) incorporating a voltage generating material into a wind turbine component such that the material generates a voltage upon deformation thereof;
(b) mounting one or more devices for operatively generating an output signal onto the wind turbine; and
(c) providing an electrical connection between the one or more devices and the voltage generating material such that during use the voltage generated by the layer of voltage generating material is used to power the one or more devices;
**characterised in that** at (a) the voltage generating material comprises at least one layer of a dielectric electroactive polymer (24) which is provided as a layer within a composite structure of the wind turbine component.

10. A method according to claim 9 for sensing a parameter of a wind turbine component comprising:
(a) incorporating the at least one layer of a voltage generating material into a first wind turbine component such that the material generates a voltage upon deformation thereof;
(b) mounting one or more sensors (12) on a second wind turbine component and providing an electrical connection between the one or more sensors and the voltage generating material;
(c) measuring a parameter of the second wind turbine component using the one or more sensors, wherein the one or more sensors emit an output signal based on the measured data; and
(d) receiving the output signal from the one or more sensors at a controller.

11. A method according to claim 10 further comprising the step of:
(e) generating a control signal from the controller for varying an operational parameter of the wind turbine in response to the measured parameter of the wind turbine component.

12. A wind turbine component having the system of any of claims 1 to 8 mounted thereon.

13. A wind turbine blade (5) having the system of any of claims 1 to 8 mounted thereon.

## Patentansprüche

1. System für eine Windturbine, das umfasst:
eine oder mehrere Vorrichtungen, die betriebsmäßig auf einer Windturbine befestigt sind, um ein Ausgabesignal während des Gebrauchs zu erzeugen; und
eine Spannungsquelle in einer elektrischen Verbindung mit der einen oder den mehreren Vorrichtungen, um die eine oder die mehreren Vorrichtungen während des Gebrauchs mit Energie zu versorgen, wobei die Spannungsquelle (22) ein spannungserzeugendes Material umfasst, das in der Lage ist, bei einer Verformung eine Spannung zu erzeugen;
**dadurch gekennzeichnet, dass** das spannungserzeugende Material mindestens eine Schicht eines dielektrisch elektroaktiven Polymers (24) umfasst, das als eine Schicht innerhalb einer Verbundstruktur einer Windturbinenkomponente, die Gegenstand einer Verformung während des Betriebs der Windturbine ist, bereitgestellt wird.

2. System nach Anspruch 1, wobei die eine oder die mehreren Vorrichtungen einen oder mehrere Sensoren (12) umfassen, die betriebsmäßig auf der Windturbinenkomponente befestigt sind, um einen Parameter der Windturbine während des Gebrauchs zu messen und um ein Ausgabesignal auf der Grundlage von Messdaten von dem einen oder den mehreren Sensoren zu erzeugen

3. System nach Anspruch 2, wobei die eine oder die mehreren Vorrichtungen einen oder mehrere Dehnungssensoren oder Verformungssensoren (12) enthalten, um die Dehnung auf der Windturbinenkomponente oder die Verformung derselben während des Gebrauchs zu messen.

4. System nach einem vorhergehenden Anspruch, wobei die eine oder die mehreren Vorrichtungen eine Komponente enthalten, die betriebsmäßig Hochfrequenzsignale aussenden.

5. System nach einem vorhergehenden Anspruch, wobei die Spannungsquelle (22) ferner eine Speicherkomponente umfasst, um die Spannung, die bei einer Verformung durch das spannungserzeugende Material erzeugt worden ist, zu speichern.

6. System nach einem vorhergehenden Anspruch, das ferner eine Steuereinheit umfasst, um das Ausgabesignal von der einen oder den mehreren Vorrichtungen zu empfangen, und um ein oder mehrere Steuersignale zur Variation eines Betriebsparameters der Windturbine auszugeben.

7. System nach einem vorhergehenden Anspruch, das ferner eine Schicht Isolationsmaterial (28) umfasst, das zwischen der Schicht eines spannungserzeugenden Materials (22) und der äußeren oder inneren Oberfläche der Windturbinenkomponente im Kontakt mit der Spannungsquelle betriebsmäßig bereitgestellt wird.

8. System nach einem vorhergehenden Anspruch, wobei die Spannungsquelle betriebsmäßig auf einem Bereich der inneren oder der äußeren Oberfläche des Windturbinenflügels bereitgestellt wird.

9. Verfahren, um die eine oder die mehreren Vorrichtungen auf einer Windturbine mit Energie zu versorgen, wobei das Verfahren umfasst:
(a) Einbinden eines spannungserzeugenden Materials in eine Windturbinenkomponente derart, dass das Material bei einer Verformung desselben eine Spannung erzeugt;
(b) Befestigen der einen oder der mehreren Vorrichtungen, um betriebsmäßig ein Ausgabesignal für die Windturbine zu erzeugen; und
(c) Bereitstellen einer elektrischen Verbindung zwischen der einen oder den mehreren Vorrichtungen und dem spannungserzeugenden Material derart, dass während des Gebrauchs die Spannung, die durch die Schicht des spannungserzeugenden Materials erzeugt worden ist, verwendet wird, um die eine oder die mehreren Vorrichtungen mit Energie zu versorgen;
**dadurch gekennzeichnet, dass** bei (a) das spannungserzeugende Material mindestens eine Schicht eines dielektrisch elektroaktiven Polymers (24) umfasst, das als eine Schicht innerhalb einer Verbundstruktur der Windturbinenkomponente bereitgestellt wird.

10. Verfahren nach Anspruch 9 zum Erfassen eines Parameters einer Windturbinenkomponente, wobei das Verfahren umfasst:
(a) Einbinden der mindestens einen Schicht eines spannungserzeugenden Materials in eine erste Windturbinenkomponente derart, dass das Material bei einer Verformung desselben eine Spannung erzeugt;
(b) Befestigen des einen oder der mehreren Sensoren (12) auf einer zweiten Windturbinenkomponente und Bereitstellen einer elektrischen Verbindung zwischen dem einen oder den mehreren Sensoren und dem spannungserzeugenden Material;
(c) Messen eines Parameters der zweiten Windturbinenkomponente unter Verwendung des einen oder der mehreren Sensoren, wobei der eine oder die mehreren Sensoren ein Ausgabesignal auf der Grundlage der gemessenen Daten aussenden; und
(d) Empfangen des Ausgabesignals von dem einen oder den mehreren Sensoren an einer Steuereinheit.

11. Verfahren nach Anspruch 10, das ferner den folgenden Schritt umfasst:
(e) Erzeugen eines Steuersignals von der Steuereinheit, um einen Betriebsparameter der Windturbine als Reaktion auf den gemessenen Parameter der Windturbinenkomponente zu variieren.

12. Windturbinenkomponente mit dem System nach einem der Ansprüche 1 bis 8, das auf derselben befestigt ist.

13. Windturbinenflügel (5) mit dem System nach einem der Ansprüche 1 bis 8, das auf derselben befestigt ist.

## Revendications

1. Système pour éolienne comprenant :
un ou plusieurs dispositifs montés de manière opérationnelle sur une éolienne pour produire un signal de sortie pendant l'utilisation ; et
une source de tension en connexion électrique avec le ou les plusieurs dispositifs pour actionner le ou les plusieurs dispositifs pendant l'utilisation, dans lequel la source de tension (22) comprend une matière produisant une tension susceptible de produire une tension lors d'une déformation ;
**caractérisé en ce que** la matière produisant une tension comprend au moins une couche d'un polymère électro-actif diélectrique (24) prévue en tant que couche à l'intérieur d'une structure composite d'un composant d'éolienne qui est soumis à une déformation pendant le fonctionnement de l'éolienne.

2. Système selon la revendication 1, dans lequel le ou les plusieurs dispositifs comprennent un ou plusieurs capteurs (12) montés de manière opérationnelle sur le composant d'éolienne pour mesurer un paramètre de l'éolienne pendant l'utilisation et produire un signal de sortie basé sur des données de mesure provenant du ou des plusieurs capteurs.

3. Système selon la revendication 2, dans lequel le ou les plusieurs dispositifs incluent un ou plusieurs capteurs de contrainte ou de déformation (12) pour mesurer la contrainte sur le composant d'éolienne ou la déformation de celui-ci pendant l'utilisation.

4. Système selon n'importe quelle revendication précédente, dans lequel le ou les plusieurs dispositifs incluent un composant émettant de manière opérationnelle des signaux de radiofréquence.

5. Système selon n'importe quelle revendication précédente, dans lequel la source de tension (22) comprend en outre un composant de stockage pour stocker la tension produite par la matière produisant une tension lors d'une déformation.

6. Système selon n'importe quelle revendication précédente, comprenant en outre une unité de commande pour recevoir le signal de sortie provenant du ou des plusieurs dispositifs et sortir un ou plusieurs signaux de commande pour modifier un paramètre opérationnel de l'éolienne.

7. Système selon n'importe quelle revendication précédente, comprenant en outre une couche d'une matière isolante (28) prévue de manière opérationnelle entre la couche de matière produisant une tension (22) et les surfaces externes ou internes du composant d'éolienne en contact avec la source de tension.

8. Système selon n'importe quelle revendication précédente, dans lequel la source de tension est prévue de manière opérationnelle sur une zone de la surface intérieure ou extérieure d'une pale d'éolienne.

9. Procédé pour actionner un ou plusieurs dispositifs sur une éolienne comprenant :
(a) l'incorporation d'une matière produisant une tension dans un composant d'éolienne de sorte que la matière produit une tension lors d'une déformation de celui-ci ;
(b) le montage d'un ou plusieurs dispositifs pour produire de manière opérationnelle un signal de sortie sur l'éolienne ; et
(c) la réalisation d'une connexion électrique entre le ou les plusieurs dispositifs et la matière produisant une tension de sorte que pendant l'utilisation la tension produite par la couche de matière produisant une tension est utilisée pour alimenter le ou les plusieurs dispositifs ;
**caractérisé en ce que** (a) la matière produisant une tension comprend au moins une couche d'un polymère électro-actif diélectrique (24) qui est fournie en tant que couche à l'intérieur d'une structure composite du composant d'éolienne.

10. Procédé selon la revendication 9 pour détecter un paramètre d'un composant d'éolienne comprenant :
(a) l'incorporation de l'au moins une couche d'une matière produisant une tension dans un premier composant d'éolienne de sorte que la matière produit une tension lors d'une déformation de celui-ci ;
(b) le montage du ou des plusieurs capteurs (12) sur un second composant d'éolienne et la réalisation une connexion électrique entre le ou les plusieurs et la matière produisant une tension ;
(c) la mesure d'un paramètre du second composant d'éolienne en utilisant le ou les plusieurs capteurs, dans lequel le ou les plusieurs capteurs émettent un signal de sortie basé sur les données mesurées ; et
(d) la réception du signal de sortie provenant du ou des plusieurs capteurs au niveau d'une unité de commande.

11. Procédé selon la revendication 10, comprenant en outre l'étape consistant à :
(e) produire un signal de commande à partir de l'unité de commande pour modifier un paramètre opérationnel de l'éolienne en réponse au paramètre mesuré du composant d'éolienne.

12. Composant d'éolienne ayant le système selon n'importe laquelle des revendications 1 à 8 monté dessus.

13. Pale d'éolienne (5) ayant le système selon n'importe laquelle des revendications 1 à 8 monté dessus.
